# EUROPÄISCHE PATENTSCHRIFT

(11) **EP 3 967 582 B1**
(45) Veröffentlichungstag und Bekanntmachung des Hinweises auf die Patenterteilung: **14.02.2024**
(21) Anmeldenummer: 21195621.4
(22) Anmeldetag: 08.09.2021
(51) Int. Cl.: B62D 65/18, B65G 1/02

(54) **TRANSPORTVORRICHTUNG**
TRANSPORT DEVICE
DISPOSITIF DE TRANSPORT

(30) Priorität: 14.09.2020 DE 202020105260 U
(43) Veröffentlichungstag der Anmeldung: 16.03.2022
(73) Patentinhaber: OBH GmbH Transport und Lagerlösungen, 59909 Bestwig (DE); Magna Exteriors GmbH, 63877 Sailauf (DE)
(72) Erfinder: KLAUKE, Thomas, 57392 Schmallenberg (DE)
(74) Vertreter: Reuter, Silke Beatrix

(56) Entgegenhaltungen:
- WO-A1-2013/147692
- DE-T2- 60 303 597
- DE-U1-202004 017 704
- ES-A1- 2 358 393
- US-A- 5 884 564

## Beschreibung

Die vorliegende Erfindung betrifft eine Transportvorrichtung gemäß dem Oberbegriff des Anspruches 1.

Für den Transport eines empfindlichen Bauteils, insbesondere eines Karosseriebauteils von Kraftfahrzeugen, kommt ein sogenannter Transportträger zum Einsatz, der der Aufnahme des zu transportierenden Bauteils dient. Der Transportträger weist mehrere Befestigungspunkte auf, deren Lage und Form an die Kontur des zu transportierenden Bauteils, beispielsweise eines Stoßfängers, eines Kotflügels oder dergleichen, angepasst ist. Bei den Karosseriebauteilen handelt es sich zumeist um dünnwandige, großflächige und dreidimensionale Bauteile aus einem Kunststoff, so dass die Bauteile ein großes Volumen bei geringem Gewicht aufweisen. Der Transport solcher Bauteile erfolgt unter anderem mittels einer Transportvorrichtung, welche zur hängenden Aufnahme von mehreren Transportträgern eingerichtet ist, die mit den zu transportierenden Bauteilen bestückt sind.

Eine solche Transportvorrichtung für zumindest einen hängend gehaltenen Transportträger zur Aufnahme eines Bauteils, insbesondere eines Karosseriebauteils, umfasst ein Rahmengestell, mit vertikal verlaufenden Seitenrahmenelementen und zumindest zwei Quertraversen, welche die Seitenrahmenelementen miteinander verbinden, sowie einen für die Beladung und Entladung offenen Zuführ- und Entnahmeabschnitt, der sich zwischen den Seitenrahmenelementen erstreckt, wobei zur hängenden Halterung zumindest zwei Führungsschienen parallel zur Längsachse des Rahmengestells verlaufend und beabstandet zueinander an den zumindest zwei Quertraversen angeordnet sind, in welche der zumindest eine Transportträger mittels an diesem angeordneten Führungselementen verschiebbar eingehängt ist.

Eine Transportvorrichtung für zumindest einen hängend gehaltenen Transportträger zur Aufnahme eines Bauteils ist beispielsweise aus der DE 20 2004 017 704 U1 bekannt. Die darin beschriebene Transportvorrichtung dient zur Lagerung und zum Transport von Bauteilen, insbesondere von Fahrzeugteilen, wobei die Bauteile hängend transportiert werden. Hierzu ist die Transportvorrichtung aus einem Rahmengestell aufgebaut, das Führungsschienen aufweist, entlang welcher ein Wagen mit einer Hängevorrichtung verschoben werden kann. Das jeweilige Bauteil wird an der Hängevorrichtung, die beispielsweise als Rundhaken ausgebildet ist, aufgehängt.

Hierbei ist ein beschädigungsfreier Transport der Bauteile nicht garantiert, da die aufgehängten Bauteile pendeln können. Die Bauteile können sich gegenseitig berühren oder an das Gestell stoßen. Somit kann es schnell zu Beschädigungen, vor allem bei Bauteilen mit zumindest teilweise empfindlichen Oberflächen, kommen, so dass ein sicherer und beschädigungsfreier Transport nicht gewährleistet ist. Ein weiterer Nachteil besteht darin, dass zur Entnahme der Bauteile aus der Transportvorrichtung jede Hängevorrichtung von einer Bedienperson einzeln betätigt werden muss, um die daran aufgehängten Bauteile beschädigungsfrei in Richtung des Zuführ- und Entnahmeabschnitts zu bewegen.

Daher besteht die Aufgabe der vorliegenden Erfindung darin, eine Transportvorrichtung der eingangs genannten Art zum beschädigungsfreien Transport von empfindlichen Bauteilen, das an mindestens einer Seite eine empfindliche Oberfläche aufweist, weiterzubilden, die sich insbesondere durch eine verbesserte Entnahmemöglichkeit der Bauteile auszeichnet. Diese Aufgabe wird durch die Merkmale des Anspruches 1 gelöst. Vorteilhafte Weiterbildungen sind Gegenstand der Unteransprüche.

Gemäß dem Anspruch 1 wird eine Transportvorrichtung mit zumindest einem hängend gehaltenen Transportträger zur Aufnahme von Bauteilen, insbesondere Karosseriebauteilen, vorgeschlagen, umfassend ein Rahmengestell, mit vertikal verlaufenden Seitenrahmenelementen und zumindest zwei Quertraversen, welche die Seitenrahmenelemente miteinander verbinden, sowie einen für die Beladung und Entladung offenen Zuführ- und Entnahmeabschnitt, der sich zwischen den Seitenrahmenelementen erstreckt, wobei zur hängenden Halterung zumindest zwei Führungsschienen parallel zur Längsachse des Rahmengestells verlaufend und beabstandet zueinander an den zumindest zwei Quertraversen angeordnet sind, in welche der zumindest eine Transportträger mittels an diesem angeordneten Führungselementen verschiebbar eingehängt ist, wobei zumindest eines der Führungselemente des zumindest einen Transportträgers eine sich zur Führungsschiene achsparallel erstreckende Strebe umfasst, wobei an einem freien Ende der Strebe ein erstes Arretiermittel und am gegenüberliegenden freien Ende der Strebe ein zweites Arretiermittel angeordnet ist, wobei das zweite Arretiermittel eines vorhergehend eingehängten Transportträgers mit dem ersten Arretiermittel eines nachfolgenden Transportträger in Eingriff bringbar ist, um die eingehängten Transportträger lösbar miteinander zu verbinden, und dass an zumindest einer Führungsschiene ein Betätigungselement im Bereich vor dem Zuführ- und Entnahmeabschnitt angeordnet ist, welches beim Herausziehen des dem Zuführ- und Entnahmeabschnitt nächstliegenden Transportträgers auf das zweite Arretiermittel einwirkt, um die Verbindung mit dem ersten Arretiermittel des nachfolgenden Transportträgers zu lösen. Mittels der Streben der Führungselemente wird einerseits eine axiale Beabstandung der benachbarten Transportträger erreicht, so dass die daran angeordneten Bauteile einander nicht berühren, und andererseits ein Kippen um die quer zu den Führungsschienen verlaufenden Längsachse des Transportträgers oder Verkanten beim Bewegen der Transportträger beim Einschieben in und dem Herausziehen aus der Transportvorrichtung verhindert. Das Zusammenwirken des ersten Arretiermittel des vorhergehend eingehängten Transportträgers mit dem zweiten Arretiermittel des nachfolgenden Transportträgers bewirkt, dass alle eingehängten Transportträger bei der Entnahme des vordersten Transportträgers mitbewegt werden und somit sukzessive in Richtung des Zuführ- und Entnahmeabschnitts geführt werden, um sie einzeln entnehmen zu können. Die miteinander verbundenen Transportträger bilden eine Art offene kinematische Kette. Auf diese Weise ist gewährleistet, dass die Entnahme durch eine Bedienperson stets von der Seite des Zuführ- und Entnahmeabschnitts erfolgen kann. Ein manuelles Nachführen der eingehängten Transportträger, wie es beim Stand der Technik gemäß der DE 20 2004 017 704 U1 erforderlich ist, entfällt, wodurch die Handhabung der Transportvorrichtung deutlich vereinfacht wird. Insbesondere kann das zweite Arretiermittel im Wesentlichen komplementär zum ersten Arretiermittel ausgebildet sein.

Bevorzugt kann das erste Arretiermittel einteilig und das zweite Arretiermittel insbesondere mehrteilig ausgeführt sein. Hierbei kann das erste Arretiermittel als eine Eingriffsöffnung und das zweite Arretiermittel als ein schwenkbeweglicher Hebel mit einem hakenförmigen Endabschnitt ausgeführt sein, welcher mit der Eingriffsöffnung des jeweils nachfolgenden Transportträgers in Eingriff bringbar ist. Die Eingriffsöffnung erstreckt sich im Wesentlichen parallel zu den Quertraversen. Das als schwenkbeweglicher Hebel ausgeführte zweite Arretiermittel weist eine zur Führungsschiene parallele Ausgangsstellung auf.

Insbesondere kann die Eingriffsöffnung als Öse oder Aussparung ausgeführt sein.

Weiterhin kann das Betätigungselement dazu eingerichtet sein, die Längsbewegung des jeweiligen Transportträgers beim Hineinschieben oder Herausziehen aus der Vorrichtung in eine Schwenkbewegung des zweiten Arretiermittels zu transformieren. Auf diese Weise kann die lineare Bewegung beim Herausziehen bzw. Hineinschieben des jeweiligen Transportträgers genutzt werden, um zugleich das zweite Arretiermittel zu betätigen, ohne dass es eines manuellen Eingriffs durch die Bedienperson bedarf.

Vorzugsweise weist das Betätigungselement einen im Wesentlichen rampenförmigen Betätigungsabschnitt auf, wobei der Betätigungsabschnitt dem zweiten Arretiermittel zugewandt positioniert ist. Der im Wesentlichen rampenförmige Verlauf des Betätigungsabschnitts steuert den Bewegungsablauf bei der Betätigung des zweiten Arretiermittels durch das Betätigungselement.

Besonders bevorzugt kann der Betätigungsabschnitt einen im Wesentlichen konvexen Verlauf aufweisen. Hierzu kann der Betätigungsabschnitt bogenförmig oder polygonal, insbesondere trapezförmig, ausgeführt sein. Insbesondere der trapezförmige Verlauf des Betätigungsabschnitts bewirkt, dass das zweite Arretiermittel beim Passieren eines Schenkels zunächst geschwenkt wird, bis es außer Eingriff mit dem ersten Arretiermittel gebracht wurde. Anschließend wird das zweite Arretiermittel so lange in seiner geschwenkten Stellung gehalten, bis es den horizontal verlaufenden Abschnitt des Betätigungsabschnitts passiert hat. Anschließend wird mit dem Passieren des weiteren Schenkels das zweite Arretiermittel wieder in seine zur Führungsschiene parallele Ausgangsstellung überführt.

Bevorzugt kann das um eine Schwenkachse schwenkbare zweite Arretiermittel mit einer Federkraft beaufschlagt sein, die einer Schwenkbewegung entgegenwirkt. Auf diese Weise wird das zweite Arretiermittel stets in seiner Ausgangstellung gehalten, wodurch das Ineinandergreifen des ersten Arretiermittels und des zweiten Arretiermittels bis zu dessen Betätigung beim Passieren des Betätigungselementes gewährleistet bleibt.

Hierzu kann auf der Schwenkachse eine Feder angeordnet sein, die einen spiralförmigen Abschnitt und einen Hebelarm aufweist, wobei der spiralförmige Abschnitt koaxial zur Schwenkachse angeordnet ist und der Hebelarm sich in Richtung des hakenförmigen Endabschnitts erstreckt und diesen abschnittsweise übergreift. Die von der Feder auf den als Hebel ausgeführte zweite Arretiermittel aufgebrachte Federkraft wirkt im Wesentlichen orthogonal zur Strebe. Durch die Feder kann das zweite Arretiermittel mit einer Vorspannung beaufschlagt werden, die verhindert, dass sich das jeweilige erste und das zweite in Eingriff befindliche Arretiermittel während eines Transports der Transportvorrichtung versehentlich voneinander lösen können.

Bevorzugt kann am dem hakenförmigen Endabschnitt gegenüberliegenden Ende des Hebels ein sich achsparallel zur Schwenkachse erstreckender Vorsprung angeordnet sein. Das Betätigungselement kann über den Vorsprung eine vertikal gerichtete Kraft auf den Hebel ausüben, um diesen um die Schwenkachse zu schwenken, so dass der hakenförmige Endabschnitt mit dem als Eingriffsöffnung ausgeführten ersten Arretiermittel, außer Eingriff gebracht wird.

Insbesondere kann der hakenförmige Endabschnitt im Wesentlichen dreieckförmig, insbesondere als ein rechtwinkliges Dreieck, ausgebildet sein, mit einer geneigt ausgeführten, der Schwenkachse abgewandten Vorderkante und einer einen senkrechten Verlauf aufweisenden, der Schwenkachse zugewandten Hinterkante. Befindet sich der hakenförmige Endabschnitt im Eingriff mit der Eingriffsöffnung, so verhindert die Hinterkante ein versehentliches Herausrutschen. Zudem wird der hakenförmige Endabschnitt durch die Beaufschlagung mit der Federkraft in dieser Stellung gehalten. Bei einem Beladen der Transportvorrichtung mit den Transportträgern wird das in Eingriff bringen des zweiten Arretiermittels mit dem ersten Arretiermittel des vorangehen eingehängten Transportträger durch die geneigt ausgeführte Vorderkante des hakenförmigen Endabschnitts begünstigt, da dieser beim Zusammenschieben der Transportträger von dem ersten Arretiermittel angehoben wird. Anschließend rastet der hakenförmige Endabschnitt aufgrund der Federkraft in die Eingriffsöffnung ein.

Die zumindest zwei Führungsschienen können als offene und/oder geschlossene Profile ausgeführt sein. Denkbar sind insbesondere C-förmige Profile oder U-förmige Profile, durch welche die Führungselemente zumindest abschnittsweise umgriffen werden.

Für eine Vereinfachung des Einführens des jeweiligen Transportträgers in die Transportvorrichtung können die Führungsschienen an ihrem dem Zuführ- und Entnahmeabschnitt zugewandten Ende einen sich im Wesentlichen trichterförmig aufweitenden Einlaufbereich aufweisen.

Für eine einfache Bewegung der Transportträger ohne größeren Kraftaufwand können an den Führungselementen mit der jeweiligen Führungsschiene in Eingriff bringbare Gleit-, Wälz- oder Rollmittel angeordnet sein.

Eine stabile Führung des jeweiligen Transportträgers kann dadurch erreicht werden, dass die Gleit-, Wälz- oder Rollmittel paarweise an einander gegenüberliegenden Seitenflächen der Strebe angeordnet sind.

Insbesondere kann das Rahmengestell stapelbar ausgeführt sein. Hierdurch wird eine platzsparende Lagerung sowie ein raumoptimierter Transport mehrerer Rahmengestelle übereinander ermöglicht.

Weiterhin kann das Rahmengestell einen im Wesentlichen U-förmigen Querschnitt aufweisen. Dazu kann das Rahmengestell auf seiner den Führungsschienen abgewandten Unterseite offen ausgeführt sein.

Bevorzugt kann das Rahmengestell in Längsrichtung verlaufende Hohlprofile aufweisen, die an den zumindest zwei Quertraversen angeordnet und endseitig offen ausgeführt sind. Die Hohlprofile dienen der Versteifung und Stabilisierung des Rahmengestells. Zudem kann die jeweilige Transportvorrichtung von einer Gabel eines Flurförderfahrzeugs aufgenommen werden, welche von beiden Stirnseiten des Rahmengestells in die Öffnungen der Hohlprofile einführbar sind.

Eine bevorzugte Ausführungsform der Erfindung wird nachfolgend unter Bezugnahme auf die Zeichnungen näher erläutert.

Es zeigen:
Fig. 1 eine perspektivische Ansicht einer Transportvorrichtung mit darin eingehängten Transportträgern;
Fig. 2 eine perspektivische Ansicht der Transportvorrichtung gemäß Fig. 1 mit einem Transportträger vor der Entnahme;
Fig. 3 eine perspektivische Ansicht der Transportvorrichtung gemäß Fig. 2 mit einem entnommenen Transportträger;

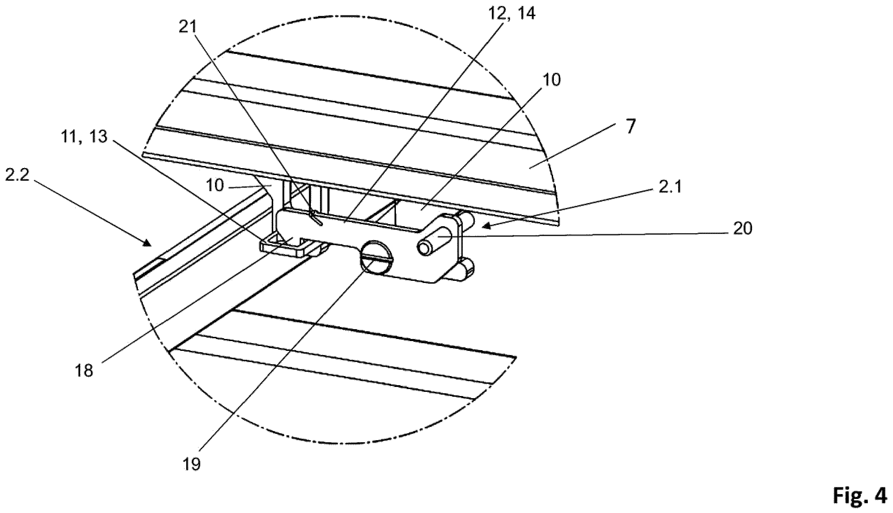

Fig. 4 eine Detailansicht eines ersten Arretiermittels und eines zweiten Arretiermittels;
Fig. 5 eine Detailansicht eines an einer Führungsschiene angeordneten Betätigungselements;
Fig. 6 eine Detailansicht des Betätigungselements gemäß Fig. 5 mit betätigtem zweiten Arretiermittel;
Fig. 7 eine Detailansicht des Betätigungselements gemäß Fig. 6 mit betätigtem zweiten Arretiermittel; und
Fig. 8 eine Detailansicht gemäß Fig. 7, mit dem zu entnehmenden Transportträger gemäßFig. 2.

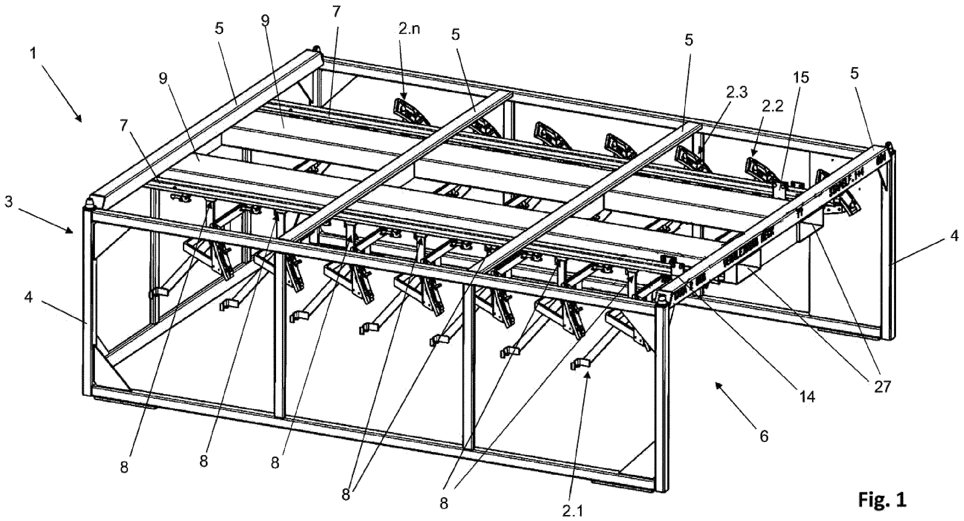

In Fig. 1 ist eine perspektivische Ansicht einer Transportvorrichtung 1 mit darin eingehängten Transportträgern 2.1, 2.2, 2.3 bis 2.n zur Aufnahme von Bauteilen, insbesondere Karosseriebauteilen, dargestellt. Die Transportvorrichtung 1 umfasst ein, insbesondere einen im Wesentlichen U-förmigen Querschnitt aufweisendes, Rahmengestell 3, mit vertikal verlaufenden Seitenrahmenelementen 4 und zumindest zwei Quertraversen 5, welche die Seitenrahmenelemente 4 obenseitig miteinander verbinden, sowie einen für die Beladung und Entladung offenen Zuführ- und Entnahmeabschnitt 6, der sich zwischen den Seitenrahmenelementen 4 erstreckt. Die dem offenen Zuführ- und Entnahmeabschnitt 6 abgewandte Stirnseite des Rahmengestells 3 ist abschnittsweise geschlossen ausgeführt. Dazu sind hier und vorzugsweise zwei oder mehr vertikal verlaufende Holme an der hinteren Quertraversen 5 angeordnet.

Der mit 2.1 bezeichnete Transportträger ist der vorangehende und zuerst zu entnehmende Transportträger. Die weiteren, vom Zuführ- und Entnahmeabschnitt 6 weiter beabstandeten Transportträger 2.2 bis 2.n bilden jeweils die nachfolgenden zu entnehmenden Transportträger. Die Transportträgern 2.1 bis 2.n sind hier und vorzugsweise identisch ausgeführt, so dass die nachfolgende Beschreibung entsprechend für alle Transportträgern 2.1 bis 2.n Gültigkeit hat.

Zur hängenden Halterung des zumindest einen Transportträgers 2.1 bis 2.n sind zumindest zwei Führungsschienen 7 parallel zur Längsachse des Rahmengestells 3 verlaufend und beabstandet zueinander an den zumindest zwei Quertraversen 5 angeordnet, in welche der zumindest eine Transportträger 2.1 bis 2.n mittels an diesem angeordneten Führungselementen 8 verschiebbar eingehängt ist. Das Rahmengestell 3 weist in Längsrichtung verlaufende, zueinander parallel angeordnete Hohlprofile 9 auf, die an den zumindest zwei Quertraversen 5 befestigt sind und endseitig jeweils eine Öffnung 27 aufweisen. Die endseitig offen ausgeführten Hohlprofile 9 ermöglichen den einfachen Transport der Transportvorrichtung 1 durch ein Flurförderfahrzeug wie einen Gabelstapler oder dergleichen.

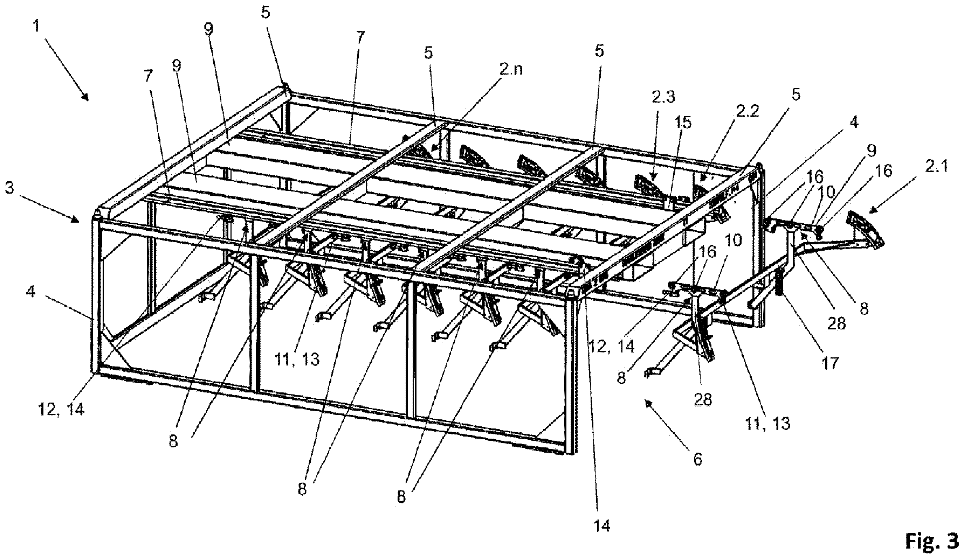

Die in Fig. 1 dargestellten Transportträger 2.1 bis 2.n sind durch ein erstes Arretiermittel 11 und ein zweites Arretiermittel 12 miteinander verbunden, so dass eine Zugbewegung des vorangehenden, zuerst zu entnehmenden Transportträgers 2.1 auf alle nachfolgenden Transportträger 2.2 bis 2.n übertragen wird. Die durch das erste Arretiermittel 11 und das zweite Arretiermittel 12 miteinander verbundenen Transportträger 2.1 bis 2.n bilden eine Art offene kinematische Kette. Hierzu umfasst das jeweilige Führungselement 8 eine sich zur Führungsschiene 7 achsparallel erstreckende, längliche Strebe 10, wobei an einem freien Ende der Strebe 10 ein erstes Arretiermittel 11 und am gegenüberliegenden freien Ende der Strebe 10 ein zweites Arretiermittel 12 angeordnet ist. Das zweite Arretiermittel 12 ist im Wesentlichen komplementär zum ersten Arretiermittel 11 ausgebildet. Die Strebe 10 dient als Abstandshalter zwischen benachbarten Transportträgern 2.1 bis 2.n. Die Länge der Streben 10 bestimmt sich anhand der korrespondierenden Abmessungen des von dem jeweiligen Transportträgern 2.1 bis 2.n aufzunehmenden, dreidimensionalen Bauteils. Die Strebe 10 ist an einem abschnittsweise vertikal verlaufenden Profilteil 28 des jeweiligen Transportträgers 2.1 bis 2.n angeordnet und ragt zu beiden Seiten abschnittsweise über den Befestigungspunkt an dem Profilteil 28 hinaus, wie in Fig. 3 dargestellt.

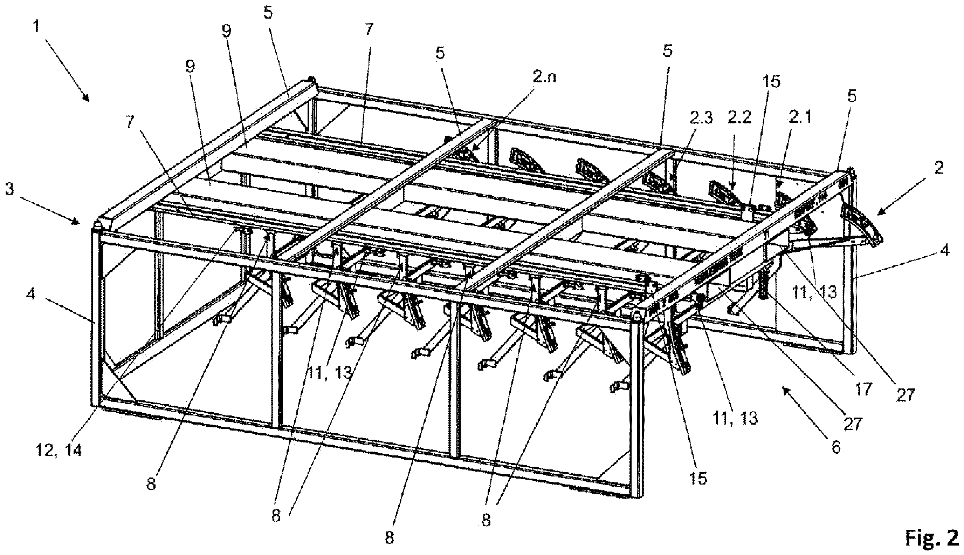

Die Darstellung in Fig. 2 zeigt eine perspektivische Ansicht der Transportvorrichtung 1 gemäß Fig. 1 mit dem Transportträger 2.1 vor der Entnahme durch eine Bedienperson durch den Zuführ- und Entnahmeabschnitt 6. Der Transportträger 2.1 hat dabei zumindest ein im Bereich vor dem Zuführ- und Entnahmeabschnitt 6 an einer der Führungsschienen 7 angeordnetes Betätigungselement 15 passiert. Vorzugsweise weist jede Führungsschiene 7 ein Betätigungselement 15 auf, die in gleichem Abstand zum Zuführ- und Entnahmeabschnitt 6 angeordnet sind. Das Betätigungselement 15 wirkt hierzu beim Herausziehen des dem Zuführ- und Entnahmeabschnitt 6 nächstliegenden Transportträgers 2.1 auf das zweite Arretiermittel 12 ein, um die Verbindung mit dem ersten Arretiermittel 11 des nachfolgenden Transportträgers 2.2 zu lösen.

In Fig. 3 ist eine perspektivische Ansicht der Transportvorrichtung 1 gemäß Fig. 2 mit dem entnommenen Transportträger 2.1 dargestellt. Der nachfolgende Transportträger 2.2 befindet sich in einer Stellung unmittelbar vor den Betätigungselementen 15. Dabei sind an den Transportträgern 2.1 bis 2.n angeordnete Griffelemente 17 ohne weiteres vom offenen Zuführ- und Entnahmeabschnitt 6 her zugänglich.

Das an der jeweiligen Strebe 10 eines Führungselements 8 angeordnete erste Arretiermittel 11 ist als eine Eingriffsöffnung 13 ausgeführt, insbesondere als eine Öse oder Aussparung. Das an der jeweiligen Strebe 10 angeordnete zweite Arretiermittel 12 ist als ein schwenkbeweglicher Hebel 14 mit einem hakenförmigen Endabschnitt 18 ausgeführt, welcher mit der Eingriffsöffnung 13 des jeweils nachfolgenden Transportträgers 2.2 in Eingriff bringbar ist.

An den Führungselementen 8 sind mit der jeweiligen Führungsschiene 7 in Eingriff bringbare Gleit-, Wälz- oder Rollmittel 16 angeordnet, um eine möglichst widerstandsarme Bewegung beim Herausziehen und Hineinschiebender Transportträger 2.1 bis 2.n zu ermöglichen.

InFig. 4ist eine Detailansicht eines ersten Arretiermittels 11 und eines zweiten Arretiermittels 12 dargestellt. Das erste Arretiermittel 11 in Form der Eingriffsöffnung 13 ist am freien Ende der Strebe 10 des - andeutungsweise dargestellten - Transportträgers 2.2 angeordnet, welches dem vorangehenden - andeutungsweise dargestellten - Transportträger 2.1 zugewandt ist. Das zweite Arretiermittel 12, welches als schwenkbeweglicher Hebel 14 mit einem hakenförmigen Endabschnitt 18 ausgeführt ist, ist am freien Ende der Strebe 10 des Transportträgers 2.1 angeordnet, welches dem nachfolgenden - andeutungsweise dargestellten - Transportträger 2.2 zugewandt ist. Der Hebel 14 ist um eine horizontale Schwenkachse 19 relativ zur Strebe 10 schwenkbar. Am dem hakenförmigen Endabschnitt 18 gegenüberliegenden freien Ende des Hebels 14 ist ein sich achsparallel zur Schwenkachse 19 erstreckender Vorsprung 20 angeordnet. Der Vorsprung 20 ist vorzugsweise zylindrisch, insbesondere kreiszylindrisch, ausgebildet. Weiterhin ist an dem jeweiligen Hebel 14 eine Feder 21 angeordnet. Die Feder 21 weist einen spiralförmigen Abschnitt und einen endseitig abgewinkelten Hebelarm auf, wobei der spiralförmige Abschnitt koaxial zur Schwenkachse 19 angeordnet ist und der abgewinkelte Hebelarm sich in Richtung des hakenförmigen Endabschnitts 18 erstreckt und den Hebel 14 abschnittsweise übergreift. Durch die Feder 21 wird das zweite Arretiermittel 12 mit einer Federkraft beaufschlagt und vorgespannt. Dadurch wird das zweite Arretiermittel 12 in einer zur Führungsschiene 7 im Wesentlichen parallelen Ausgangsstellung gehalten.

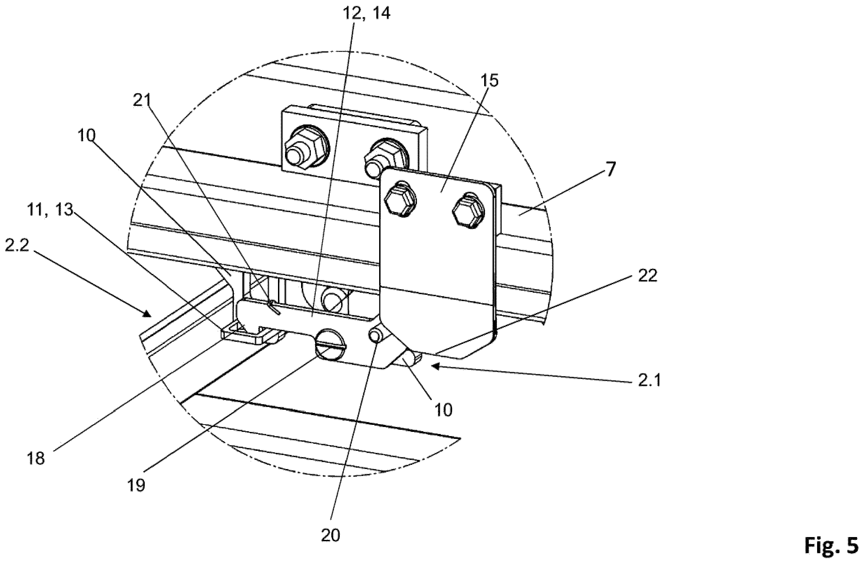

In Fig. 5 ist eine Detailansicht eines an einer Führungsschiene 7 angeordneten Betätigungselements 15 dargestellt. Das Betätigungselement 15 weist einen im Wesentlichen rampenförmigen Betätigungsabschnitt 22 auf, wobei der Betätigungsabschnitt 22 dem zweiten Arretiermittel 12 zugewandt ausgerichtet ist. Der Betätigungsabschnitt 22 weist einen im Wesentlichen konvexen Verlauf auf. Hier und vorzugsweise ist der Betätigungsabschnitt 22 trapezförmig ausgebildet. Ein im Wesentlichen bogenförmiger Verlauf des Betätigungsabschnitts 22 ist ebenfalls denkbar.

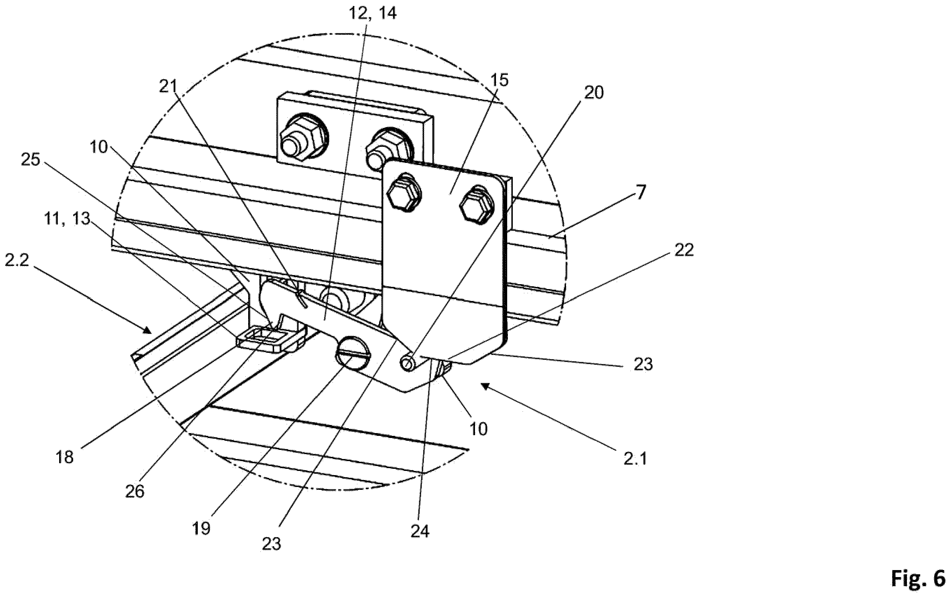

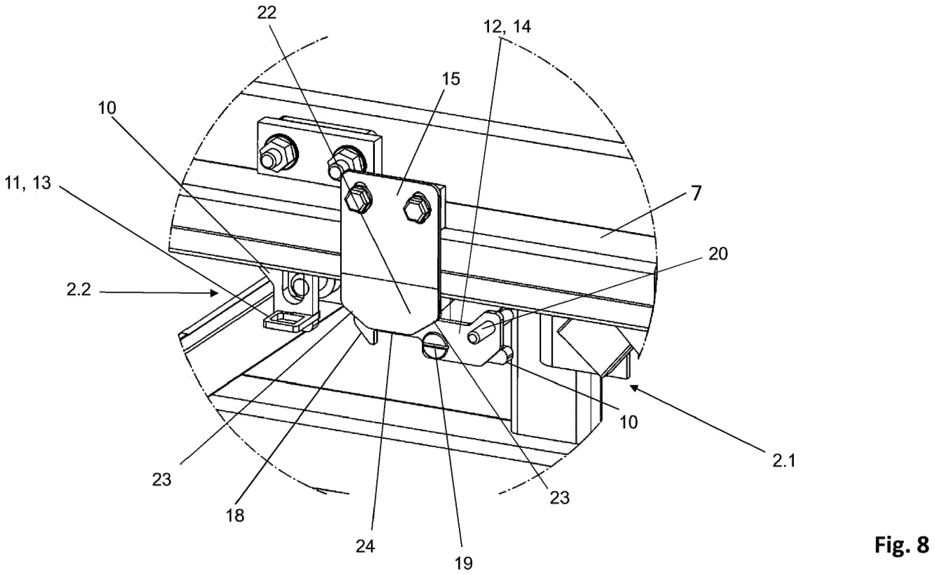

Die Darstellung in Fig. 6zeigt eine Detailansicht des Betätigungselements 15 gemäß Fig. 5mit betätigtem zweiten Arretiermittel 12. Beim Herausziehen des Transportträgers 2.1 gleitet der Vorsprung 20 entlang eines geneigten Schenkels 23 des rampenförmigen Betätigungsabschnitt 22. Der trapezförmige Verlauf des Betätigungsabschnitts 22 bewirkt, dass das zweite Arretiermittel 12 beim Passieren des geneigten Schenkels 23 zunächst entgegen der Federkraft der Feder 21 um die Schwenkachse 19 geschwenkt wird, bis es außer Eingriff mit dem ersten Arretiermittel 11 gebracht wurde. Anschließend wird das das zweite Arretiermittel 12 so lange in seiner geschwenkten Stellung gehalten, bis es einen horizontal verlaufenden Abschnitt 24 des Betätigungsabschnitts 22 passiert hat. Anschließend wird mit dem Passieren des weiteren Schenkels 23 das zweite Arretiermittel 12 wieder in seine zur Führungsschiene 7 parallele Ausgangsstellung überführt, wie in Fig. 8 dargestellt.

Wie der Darstellung in Fig. 6 zu entnehmen ist, ist der hakenförmige Endabschnitt 18 im Wesentlichen dreieckförmig, insbesondere als ein rechtwinkliges Dreieck, ausgebildet. Der hakenförmige Endabschnitt 18 ist mit einer geneigt ausgeführten, der Schwenkachse 19 abgewandten Vorderkante 25 und einer einen senkrechten Verlauf aufweisenden, der Schwenkachse 19 zugewandten Hinterkante 26 ausgebildet.

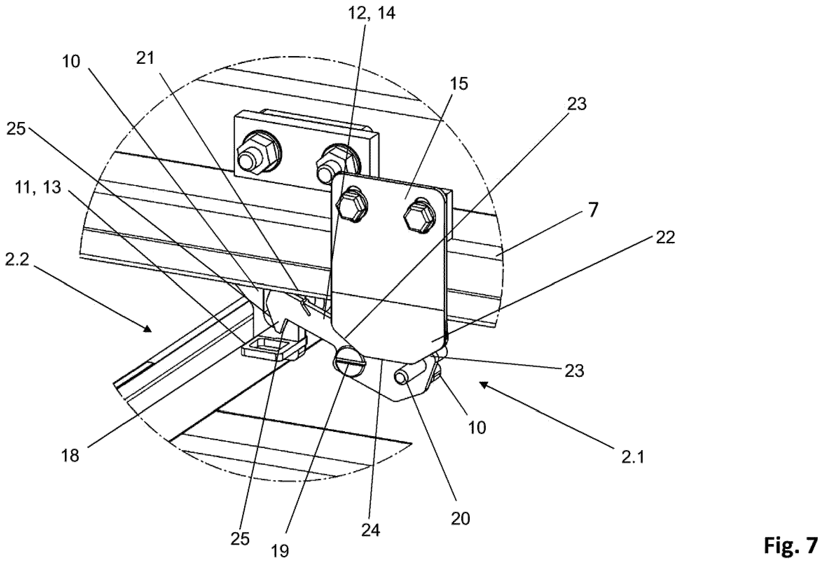

Fig. 7stellt eine Detailansicht des Betätigungselements 15 gemäß Fig. 6mit betätigtem zweiten Arretiermittel 12 dar. Das als Hebel 14 ausgeführte zweite Arretiermittel 12 wird durch den Vorsprung 20, der während des Herausziehens an dem horizontal verlaufenden Abschnitt 24 des Betätigungsabschnitts 22 anliegt, in seiner um die Schwenkachse 19 nach oben ausgelenkten Stellung gehalten.

Die Darstellung in Fig. 8zeigt eine Detailansicht gemäß Fig. 7, mit dem zu entnehmenden Transportträger 2.1 gemäß Fig. 2. Nach dem Lösen des zweiten Arretiermittels 12 des vorangehenden Transportträger 2.1 von dem Arretiermittel 11 des nachfolgenden Transportträgers 2.2 verbleibt dieser in einer Position nahezu unmittelbar vor dem Betätigungselement 15, so dass die Bedienperson den Transportträger 2.2 auf der Seite des Zuführ- und Entnahmeabschnitts 6 an den Griffelementen 17 fassen kann, um diesen als nächsten zu entnehmen. Mit jeder Entnahme eines vorangehenden Transportträgers 2.1 bis 2.n werden die nachfolgenden Transportträger 2.2 bis 2.n selbsttätig nachgeführt. Zugleich sind diese nachfolgenden Transportträger 2.2 bis 2.n durch das Betätigungselement 15 sowie das mit Federkraft beaufschlagte Arretiermittel 12 gegen ein versehentliches Herausrutschen oder Herausgleiten gesichert.

### Bezugszeichenliste

1: Transportgestell
2.1 - 2.n: Transportträger
3: Rahmengestell
4: Seitenrahmenelementen
5: Quertraversen
6: Zuführ- und Entnahmeabschnitt
7: Führungsschiene
8: Führungselemente
9: Hohlprofil
10: Strebe
11: Erstes Arretiermittel
12: Zweites Arretiermittel
13: Eingriffsöffnung
14: Hebel
15: Betätigungselement
16: Gleit-, Wälz- oder Rollmittel
17: Griffelement
18: Hakenförmiger Endabschnitt
19: Schwenkachse
20: Vorsprung
21: Feder
22: Betätigungsabschnitt
23: Schenkel von 15
24: Abschnitt von 15
25: Vorderkante
26: Hinterkante
27: Öffnung von 9
28: Profilteil

## Patentansprüche

1. Transportvorrichtung (1) mit zumindest einem hängend gehaltenen Transportträger (2.1, 2.2, ..., 2.n) zur Aufnahme von Bauteilen, insbesondere Karosseriebauteilen, umfassend ein Rahmengestell (3), mit vertikal verlaufenden Seitenrahmenelementen (4) und zumindest zwei Quertraversen (5), welche die Seitenrahmenelemente (4) miteinander verbinden, sowie einen für die Beladung und Entladung offenen Zuführ- und Entnahmeabschnitt (6), der sich zwischen den Seitenrahmenelementen (4) erstreckt, wobei zur hängenden Halterung zumindest zwei Führungsschienen (7) parallel zur Längsachse des Rahmengestells (3) verlaufend und beabstandet zueinander an den zumindest zwei Quertraversen (5) angeordnet sind, in welche der zumindest eine Transportträger (2.1, 2.2, ..., 2.n) mittels an diesem angeordneten Führungselementen (8) verschiebbar eingehängt ist, **dadurch gekennzeichnet, dass** zumindest eines der Führungselemente (8) eine sich zur Führungsschiene (7) achsparallel erstreckende Strebe (10) umfasst, wobei an einem freien Ende der Strebe ein erstes Arretiermittel (11) und am gegenüberliegenden freien Ende der Strebe (10) ein zweites Arretiermittel (12) angeordnet ist, wobei das zweite Arretiermittel eines vorhergehend eingehängten Transportträgers (2.1, 2.2, ..., 2.n) mit dem ersten Arretiermittel eines nachfolgenden Transportträger (2.2, ..., 2.n) in Eingriff bringbar ist, um die eingehängten Transportträger (2.1, 2.2, ..., 2.n) lösbar miteinander zu verbinden, und dass an zumindest einer Führungsschiene (7) ein Betätigungselement (15) im Bereich vor dem Zuführ- und Entnahmeabschnitt (6) angeordnet ist, welches beim Herausziehen des dem Zuführ- und Entnahmeabschnitt (6) nächstliegenden Transportträgers (2.1, 2.2, ..., 2.n) auf das zweite Arretiermittel (12) einwirkt, um die Verbindung mit dem ersten Arretiermittel (11) des nachfolgenden Transportträgers (2.2, ..., 2.n) zu lösen.

2. Transportvorrichtung (1) nach Anspruch 1, **dadurch gekennzeichnet, dass** das erste Arretiermittel (11) als eine Eingriffsöffnung (13) und das zweite Arretiermittel (12) als ein schwenkbeweglicher Hebel (14) mit einem hakenförmigen Endabschnitt (18) ausgeführt ist, welcher mit der Eingriffsöffnung (13) des jeweils nachfolgenden Transportträgers (2.2, ..., 2.n) in Eingriff bringbar ist.

3. Transportvorrichtung (1) nach Anspruch 2, **dadurch gekennzeichnet, dass** das die Eingriffsöffnung (13) als Öse oder Aussparung ausgeführt ist.

4. Transportvorrichtung (1) nach einem der Ansprüche 1 bis 3, **dadurch gekennzeichnet, dass** das Betätigungselement (15) dazu eingerichtet ist, die Längsbewegung des jeweiligen Transportträgers (2.1, 2.2, ..., 2.n) beim Hineinschieben oder Herausziehen aus der Transportvorrichtung in eine Schwenkbewegung des zweiten Arretiermittels (12) zu transformieren.

5. Transportvorrichtung (1) nach einem der vorangehenden Ansprüche, **dadurch gekennzeichnet, dass** das Betätigungselement (15) einen im Wesentlichen rampenförmigen Betätigungsabschnitt (22) aufweist, wobei der Betätigungsabschnitt (22) dem zweiten Arretiermittel (12) zugewandt positioniert ist.

6. Transportvorrichtung (1) nach Anspruch 5, **dadurch gekennzeichnet, dass** der Betätigungsabschnitt (22) einen im Wesentlichen konvexen Verlauf aufweist.

7. Transportvorrichtung (1) nach einem der vorangehenden Ansprüche, **dadurch gekennzeichnet, dass** das um eine Schwenkachse (19) schwenkbare zweite Arretiermittel (12) mit einer Federkraft beaufschlagt ist, die einer Schwenkbewegung entgegenwirkt.

8. Transportvorrichtung (1) nach Anspruch 7 und Anspruch 2, **dadurch gekennzeichnet, dass** auf der Schwenkachse (19) eine Feder (21) angeordnet ist, die einen spiralförmigen Abschnitt und einen Hebelarm aufweist, wobei der spiralförmige Abschnitt koaxial zur Schwenkachse (19) angeordnet ist und der Hebelarm sich in Richtung des hakenförmigen Endabschnitts (18) erstreckt und diesen abschnittsweise übergreift.

9. Transportvorrichtung (1) nach Anspruch 8, **dadurch gekennzeichnet, dass** am dem hakenförmigen Endabschnitt (18) gegenüberliegenden Ende des Hebels (14) ein sich achsparallel zur Schwenkachse (19) erstreckender Vorsprung (20) angeordnet ist.

10. Transportvorrichtung (1) nach Anspruch 2 mit 7, **dadurch gekennzeichnet, dass** der hakenförmigen Endabschnitt (18) im Wesentlichen dreieckförmig, insbesondere als ein rechtwinkliges Dreieck, ausgebildet ist, mit einer geneigt ausgeführten, der Schwenkachse (19) abgewandten Vorderkante (25) und einer einen senkrechten Verlauf aufweisenden, der Schwenkachse (19) zugewandten Hinterkante (26).

11. Transportvorrichtung (1) nach einem der vorangehenden Ansprüche, **dadurch gekennzeichnet, dass** die Führungsschienen (7) als offene und/oder geschlossene Profile ausgeführt sind.

12. Transportvorrichtung (1) nach einem der vorangehenden Ansprüche, **dadurch gekennzeichnet, dass** die Führungsschienen (7) ein im Wesentlichen U-förmiges oder C-förmiges Profil aufweisen.

13. Transportvorrichtung (1) nach einem der vorangehenden Ansprüche, **dadurch gekennzeichnet, dass** die Führungsschienen (7) an ihrem dem Zuführ- und Entnahmeabschnitt (6) zugewandten Ende einen im Wesentlichen trichterförmig aufweitenden Einlaufbereich aufweisen.

14. Transportvorrichtung (1) nach einem der vorangehenden Ansprüche, **dadurch gekennzeichnet, dass** an den Führungselementen (8) mit der jeweiligen Führungsschiene (7) in Eingriff bringbare Gleit-, Wälz- oder Rollmittel (16) angeordnet sind.

15. Transportvorrichtung (1) nach Anspruch 14, **dadurch gekennzeichnet, dass** die Gleit-, Wälz- oder Rollmittel (16) paarweise an einander gegenüberliegenden Seitenflächen der Strebe (10) angeordnet sind.

16. Transportvorrichtung (1) nach einem der vorangehenden Ansprüche, **dadurch gekennzeichnet, dass** das Rahmengestell (3) stapelbar ausgeführt ist.

17. Transportvorrichtung (1) nach einem der vorangehenden Ansprüche, **dadurch gekennzeichnet, dass** das Rahmengestell (3) einen im Wesentlichen U-förmigen Querschnitt aufweist.

18. Transportvorrichtung (1) nach einem der vorangehenden Ansprüche, **dadurch gekennzeichnet, dass** das Rahmengestell (3) in Längsrichtung verlaufende Hohlprofile (9) aufweist, die an den zumindest zwei Quertraversen (5) angeordnet und endseitig offen ausgeführt sind.

## Claims

1. Transport device (1) having at least one transport carrier (2.1, 2.2, ..., 2.n), which is retained in a suspended manner and is intended to receive components, in particular bodywork components, and comprising a framework (3) with vertically running lateral frame elements (4) and at least two crossmembers (5), which connect the lateral frame elements (4) together, and also comprising a supply and withdrawal portion (6), which is open for loading and unloading operations and extends between the lateral frame elements (4), wherein, for the retention in a suspended manner, at least two guide rails (7) are arranged on the at least two crossmembers (5) such that said guide rails run parallel to the longitudinal axis of the framework (3) and are spaced apart from one another, the at least one transport carrier (2.1, 2.2, ..., 2.n) being displaceably mounted in said guide rails by means of guide elements (8) arranged on said transport carrier, **characterized in that** at least one of the guide elements (8) comprises a strut (10) extending axially parallel to the guide rail (7), wherein a first locking means (11) is arranged at one free end of the strut and a second locking means (12) is arranged at the opposite free end of the strut (10), wherein the second locking means of a previously mounted transport carrier (2.1, 2.2, ..., 2.n) can be brought into engagement with the first locking means of a subsequent transport carrier (2.2, ..., 2.n) in order to releasably connect the mounted transport carriers (2.1, 2.2, ..., 2.n) together, and **in that** an actuating element (15) is arranged on at least one guide rail (7) in the region before the supply and withdrawal portion (6), said actuating element acting on the second locking means (12), when the transport carrier (2.1, 2.2, ..., 2.n) closest to the supply and withdrawal portion (6) is being removed, in order to release the connection to the first locking means (11) of the subsequent transport carrier (2.2, ..., 2.n).

2. Transport device (1) according to Claim 1, **characterized in that** the first locking means (11) is in the form of an engagement opening (13) and the second locking means (12) is in the form of a pivotably movable lever (14) with a hook-like end portion (18), which can be brought into engagement with the engagement opening (13) of the respectively subsequent transport carrier (2.2, ..., 2.n).

3. Transport device (1) according to Claim 2, **characterized in that** the engagement opening (13) is in the form of an eye or cutout.

4. Transport device (1) according to one of Claims 1 to 3, **characterized in that** the actuating element (15) is configured to transform the longitudinal movement of the respective transport carrier (2.1, 2.2, ..., 2.n), when the latter is being inserted into or removed from the transport device, into a pivoting movement of the second locking means (12).

5. Transport device (1) according to one of the preceding claims, **characterized in that** the actuating element (15) has a substantially ramp-like actuating portion (22), wherein the actuating portion (22) is positioned facing the second locking means (12).

6. Transport device (1) according to Claim 5, **characterized in that** the actuating portion (22) has a substantially convex progression.

7. Transport device (1) according to one of the preceding claims, **characterized in that** the second locking means (12), which can be pivoted about a pivot pin (19), is subjected to a spring force that counteracts a pivoting movement.

8. Transport device (1) according to Claim 7 and Claim 2, **characterized in that** a spring (21), which has a helical portion and a lever arm, is arranged on the pivot pin (19), wherein the helical portion is arranged coaxially with respect to the pivot pin (19) and the lever arm extends in the direction of the hook-like end portion (18) and engages over a portion of the latter.

9. Transport device (1) according to Claim 8, **characterized in that** a protrusion (20), which extends axially parallel to the pivot pin (19), is arranged at that end of the lever (14) that lies opposite the hook-like end portion (18).

10. Transport device (1) according to Claim 2 with Claim 7, **characterized in that** the hook-like end portion (18) is substantially triangular, in particular is in the form of a right-angled triangle, having an inclined front edge (25), which faces away from the pivot pin (19), and a rear edge (26), which has a vertical progression and faces the pivot pin (19).

11. Transport device (1) according to one of the preceding claims, **characterized in that** the guide rails (7) are in the form of open and/or closed profiles.

12. Transport device (1) according to one of the preceding claims, **characterized in that** the guide rails (7) have a substantially U-shaped or C-shaped profile.

13. Transport device (1) according to one of the preceding claims, **characterized in that** the guide rails (7), at the end thereof that faces the supply and withdrawal portion (6), have an infeed region, which widens substantially in the manner of a funnel.

14. Transport device (1) according to one of the preceding claims, **characterized in that** sliding, rolling or roller means (16) that can be brought into engagement with the respective guide rail (7) are arranged on the guide elements (8).

15. Transport device (1) according to Claim 14, **characterized in that** the sliding, rolling or roller means (16) are arranged in pairs on mutually opposite lateral surfaces of the strut (10).

16. Transport device (1) according to one of the preceding claims, **characterized in that** the framework (3) is stackable.

17. Transport device (1) according to one of the preceding claims, **characterized in that** the framework (3) has a substantially U-shaped cross section.

18. Transport device (1) according to one of the preceding claims, **characterized in that** the framework (3) has hollow profiles (9), which run in the longitudinal direction, are arranged on the at least two crossmembers (5) and are open at the ends.

## Revendications

1. Dispositif de transport (1) avec au moins un support de transport (2.1, 2.2, ..., 2.n) maintenu suspendu pour recevoir des composants, notamment des composants de carrosserie, comprenant un châssis (3), avec des éléments de cadre latéraux (4) s'étendant verticalement et au moins deux traverses (5) qui relient les éléments de cadre latéraux (4) entre eux, ainsi qu'une section d'amenée et de prélèvement (6) ouverte pour le chargement et le déchargement, qui s'étend entre les éléments de cadre latéraux (4), au moins deux rails de guidage (7), s'étendant parallèlement à l'axe longitudinal du châssis (3) et espacés l'un de l'autre, étant agencés sur les au moins deux traverses (5) pour le maintien en suspension, dans lesquels l'au moins un support de transport (2.1, 2.2, ..., 2.n) est accroché de manière coulissante au moyen d'éléments de guidage (8) agencés sur celui-ci, **caractérisé en ce qu'**au moins l'un des éléments de guidage (8) comprend une entretoise (10) s'étendant en parallélisme axial avec le rail de guidage (7), un premier moyen d'arrêt (11) étant agencé à une extrémité libre de l'entretoise et un deuxième moyen d'arrêt (12) étant agencé à l'extrémité libre opposée de l'entretoise (10), le deuxième moyen d'arrêt d'un support de transport précédemment accroché (2.1, 2.2, ..., 2.n) pouvant être mis en prise avec le premier moyen d'arrêt d'un support de transport suivant (2.2, ..., 2.n), afin de relier entre eux de manière amovible les supports de transport accrochés (2.1, 2.2, ..., 2.n), et **en ce qu'**un élément d'actionnement (15) est agencé sur au moins un rail de guidage (7) dans la zone avant la section d'amenée et de prélèvement (6), lequel élément d'actionnement agit lors de l'extraction du support de transport (2.1, 2.2, ..., 2.n) situé en aval de la section d'amenée et de prélèvement (6) sur le deuxième moyen d'arrêt (12) afin de rompre la liaison avec le premier moyen d'arrêt (11) du support de transport suivant (2.2, ..., 2.n).

2. Dispositif de transport (1) selon la revendication 1, **caractérisé en ce que** le premier moyen d'arrêt (11) est réalisé sous la forme d'une ouverture de prise (13) et le deuxième moyen d'arrêt (12) est réalisé sous la forme d'un levier mobile en pivotement (14) avec une section d'extrémité (18) en forme de crochet qui peut être mise en prise avec l'ouverture de prise (13) du support de transport respectivement suivant (2.2, ..., 2.n).

3. Dispositif de transport (1) selon la revendication 2, **caractérisé en ce que** l'ouverture de prise (13) est réalisée sous forme d'oeillet ou d'évidement.

4. Dispositif de transport (1) selon l'une quelconque des revendications 1 à 3, **caractérisé en ce que** l'élément d'actionnement (15) est adapté pour transformer le mouvement longitudinal du support de transport respectif (2.1, 2.2, ..., 2.n) lors de l'insertion ou de l'extraction hors du dispositif de transport en un mouvement de pivotement du deuxième moyen d'arrêt (12).

5. Dispositif de transport (1) selon l'une quelconque des revendications précédentes, **caractérisé en ce que** l'élément d'actionnement (15) présente une section d'actionnement (22) essentiellement en forme de rampe, la section d'actionnement (22) étant positionnée tournée vers le deuxième moyen d'arrêt (12).

6. Dispositif de transport (1) selon la revendication 5, **caractérisé en ce que** la section d'actionnement (22) présente un tracé essentiellement convexe.

7. Dispositif de transport (1) selon l'une quelconque des revendications précédentes, **caractérisé en ce que** le deuxième moyen d'arrêt (12) pouvant pivoter autour d'un axe de pivotement (19) est sollicité avec une force de ressort qui s'oppose à un mouvement de pivotement.

8. Dispositif de transport (1) selon la revendication 7 et la revendication 2, **caractérisé en ce que** sur l'axe de pivotement (19) est agencé un ressort (21) qui présente une section hélicoïdale et un bras de levier, la section hélicoïdale étant agencée coaxialement à l'axe de pivotement (19) et le bras de levier s'étendant en direction de la section d'extrémité (18) en forme de crochet et venant en prise au-dessus de celle-ci par sections.

9. Dispositif de transport (1) selon la revendication 8, **caractérisé en ce qu'**une saillie (20) s'étendant en parallélisme axial avec l'axe de pivotement (19) est agencée à extrémité du levier (14) opposée à la section d'extrémité (18) en forme de crochet.

10. Dispositif de transport (1) selon la revendication 2 avec 7, **caractérisé en ce que** la section d'extrémité (18) en forme de crochet est configurée sous forme essentiellement triangulaire, notamment sous la forme d'un triangle rectangle, avec un bord avant (25) réalisé sous forme inclinée, détourné de l'axe de pivotement (19) et un bord arrière (26) présentant un tracé vertical, tourné vers l'axe de pivotement (19).

11. Dispositif de transport (1) selon l'une quelconque des revendications précédentes, **caractérisé en ce que** les rails de guidage (7) sont réalisés sous forme de profilés ouverts et/ou fermés.

12. Dispositif de transport (1) selon l'une quelconque des revendications précédentes, **caractérisé en ce que** les rails de guidage (7) présentent un profil essentiellement en forme de U ou en forme de C.

13. Dispositif de transport (1) selon l'une quelconque des revendications précédentes, **caractérisé en ce que** les rails de guidage (7) présentent, à leur extrémité tournée vers la section d'amenée et de prélèvement (6), une zone d'entrée s'élargissant essentiellement en forme d'entonnoir.

14. Dispositif de transport (1) selon l'une quelconque des revendications précédentes, **caractérisé en ce que** des moyens de glissement, de cylindrage ou de roulement (16) pouvant être mis en prise avec le rail de guidage (7) respectif sont agencés sur les éléments de guidage (8).

15. Dispositif de transport (1) selon la revendication 14, **caractérisé en ce que** les moyens de glissement, de cylindrage ou de roulement (16) sont agencés par paires sur des surfaces latérales opposées de l'entretoise (10).

16. Dispositif de transport (1) selon l'une quelconque des revendications précédentes, **caractérisé en ce que** le châssis (3) est réalisé sous forme empilable.

17. Dispositif de transport (1) selon l'une quelconque des revendications précédentes, **caractérisé en ce que** le châssis (3) présente une section transversale essentiellement en forme de U.

18. Dispositif de transport (1) selon l'une quelconque des revendications précédentes, **caractérisé en ce que** le châssis (3) présente des profilés creux (9) s'étendant dans la direction longitudinale, qui sont agencés sur les au moins deux traverses (5) et sont réalisés sous forme ouverte aux extrémités.
